# EUROPÄISCHE PATENTSCHRIFT

(11) **EP 3 622 441 B1**
(45) Veröffentlichungstag und Bekanntmachung des Hinweises auf die Patenterteilung: **25.01.2023**
(21) Anmeldenummer: 18721684.1
(22) Anmeldetag: 02.05.2018
(51) Int. Cl.: G06K 19/077

(54) **ELASTISCHER TRÄGERFILM**
ELASTIC CARRIER FILM
FILM DE SUPPORT ELASTIQUE

(30) Priorität: 10.05.2017 DE 102017004499
(43) Veröffentlichungstag der Anmeldung: 18.03.2020
(73) Patentinhaber: Giesecke+Devrient Mobile Security GmbH, 81677 München (DE)
(72) Erfinder: RIEDL, Josef, 85395 Attenkirchen (DE); ENDRES, Günter, 81547 München (DE)
(74) Vertreter: Giesecke + Devrient IP
(86) Internationale Anmeldenummer: PCT/EP2018/000234
(87) Internationale Veröffentlichungsnummer: WO 2018/206141

(56) Entgegenhaltungen:
- WO-A2-2016/018777
- DE-A1- 3 810 078
- US-A- 5 283 423
- US-A1- 2002 070 280
- US-A1- 2009 295 542
- US-A1- 2012 175 422
- US-A1- 2014 191 040
- US-A1- 2015 144 702
- US-A1- 2016 171 363

## Beschreibung

Die vorliegende Erfindung ist gerichtet auf einen Folienverbund zur Verwendung in einem Kartenkörper eines tragbaren Datenträgers, vorzugsweise einer sogenannten Chipcard oder einer Smartcard. Durch die erfindungsgemäße Schichtenanordnung ist es möglich, elektronische Komponenten bzw. ein elektrisches Leitungselement vor Beschädigung zu schützen. Die vorliegende Erfindung betrifft ferner eine Chipkarte aufweisend den Folienverbund, sowie eine Vorrichtung zur Herstellung des vorgeschlagenen Folienverbunds mitsamt einem Verfahren zum Herstellen des Folienverbunds. Ferner wird ein Computerprogrammprodukt vorgeschlagen, mit Steuerbefehlen, welche das Verfahren ausführen bzw. die vorgeschlagene Vorrichtung betreiben.

DE 297 08 687 U1 zeigt eine Klebeverbindung, wobei die Klebeschicht einen mehrschichtigen Aufbau aufweist, der aus einer flexiblen Kernschicht aus Acrylat und Randschichten besteht. Hierbei wird jedoch nicht auf Verbindungselemente abgestellt.

WO 2011 063 949 A2 zeigt ein Verfahren zur Herstellung eines Folienverbundwerkstoffs, insbesondere zur Verwendung als Schicht in einem Kartenkörper, vorzugsweise in einem Kartenkörper eines tragbaren Datenträgers. EP 2 539 147 A1 zeigt ebenfalls einen Folienverbundwerkstoff aufweisend mehrere Schichten, wobei ein thermoplastischer Elastomer Verwendung findet.

DE 10 2010 009 242 A1 zeigt ein Folienverbundmaterial in einem Kartenkörper mit unterschiedlichen Schichten, die teilweise coextrudiert sind.

US 2012/0175422 beschreibt einen RFID-Transponder im Kartenformat, welcher aus drei laminierten Polycarbonat-Schichten besteht. Polycarbonat wird als Lösung für die Probleme mit Schichten aus Thermoplast vorgeschlagen. Die unterste Polycarbonat-Schicht trägt eine Spulenantenne, welche über Bonddrähte mit einem Chipmodul verbunden ist.

US 2015/0144702 beschreibt einen kartenförmigen Datenträger, welcher am Körper tragbar ist. In dem Datenträger ist eine Spulenantenne zwischen elastischen Schichten angeordnet. Die elastischen Schichten sind atmungsaktiv und bestehen aus viskoelastischen polymerem Material mit niedrigem Elastizitätsmodul und hoher Versagensspannung, wie beispielsweise Silikon oder Polyurethan.

Bei Dualinterface-Karten gilt es einen Kontakt zwischen Modul und Spule/ Antenne herzustellen. Dies geschieht derzeit bei kurzlebigen Karten (z. B. Kreditkarten) über ein mechanisches Medium (Kontakt per metallische Leitung, z. B. Flexbump, Lötverbindung, etc.). Für langlebige Karten ist dies jedoch nicht geeignet, da die Kontaktverbindungen über die längere Gebrauchszeit nicht dauerhaft sichergestellt ist. Zudem handelt es sich dabei fast immer um hoheitliche Ausweissysteme wie z. B. ID-Karten, Krankenversichertenkarten, Reisepässe, Führerschein, etc., die mit dieser Funktion wesentlich kritischer hinsichtlich eines Funktionsausfalles einzuordnen sind als z. B. Kreditkarten. Darüber hinaus sind langlebige Karten zu fast 100 % aus PC oder PET hergestellt.

Eine Anforderung ist, dass die Karten über die gesamte Lebensdauer zu nahezu 100 % ohne Ausfälle funktionieren müssen.

Bekannt ist ein System, wobei eine kleine Drahtspule mit einer großen Drahtspule auf eine Trägerfolie verlegt wird. Die kleine Spule stellt durch eine induktive Kopplung eine Verbindung zur Spule auf dem Modul her und überträgt damit die Daten. Die größere Draht-Spule, welche mit der kleineren Spule verbunden ist, überträgt dann die Informationen zum Lesegerät.

Ferner bekannt ist ein System, das mittels Ätztechnik Antennen und Spulen auf PET-Folien erzeugt und über RF-Frequenzen die Informationen elektromagnetisch überträgt. Ätztechnik funktioniert nur mit PET-Folien und hat zur Folge, dass damit kein bzw. nur ein schlechter Laminierverbund zu anderen Materialien (z. B. PVC oder PC) gegeben ist.

Polycarbonat ist als spannungsrissempfindlich bekannt. Folien und Karten brechen dadurch sehr leicht aufgrund des Kupferdrahtes, welcher eine hohe Kerbwirkung auf das steife PC-Material ausübt. Kommen noch äußere Einwirkungen dazu, so bricht das Material sehr schnell. Erfahrungsgemäß stellt die Unterkante des Chipmoduls eine zusätzliche Schwachstelle dar, die bei Biegebelastung zum Bruch der Karte führt.

Beim Bruch der Karte, verursacht durch den Kupferdraht oder auch durch das Chipmodul selbst, reißen durch die Nähe zur Spule auch ein oder mehrere Kupferdrähte ab und haben einen Funktionsausfall, d.h. fehlende Datenübertragung, der Karte zur Folge.

Somit besteht gemäß dem Stand der Technik der Nachteil, dass Chipkarten brechen können, da diese typischerweise aus einem steifen Material ausgestaltet sind und im täglichen Gebrauch erheblichen Krafteinwirkungen ausgesetzt sind. So werden Chipkarten typischerweise gebogen, was oftmals zu einem Brechen der Chipkarte in der Nähe von elektronischen Bauteilen geschieht. Ferner werden hierbei Verbindungsleitungen durchtrennt, so dass die Chipkarten nicht mehr ordnungsgemäß arbeiten können.

Es ist daher eine Aufgabe der vorliegenden Erfindung, einen Folienverbund zur Verwendung in einem Kartenkörper bereitzustellen, der es ermöglicht, dass ein elektrisches Leitungselement mechanisch möglichst geschont wird und es insbesondere bei einer Krafteinwirkung nicht zu einem Bruch in dem Kartenkörper kommt. Es ist ferner eine Aufgabe der vorliegenden Erfindung, eine entsprechende Chipkarte vorzuschlagen bzw. eine Vorrichtung zur Herstellung des Folienverbunds bzw. der Chipkarte. Ferner ist es eine Aufgabe, ein entsprechendes Verfahren zum Herstellen eines Folienverbunds vorzuschlagen sowie ein Computerprogrammprodukt mit Steuerbefehlen, welche das Verfahren ausführen bzw. die Vorrichtung betreiben.

Die Aufgabe wird gelöst durch einen Folienverbund gemäß Patentanspruch 1. Weitere vorteilhafte Ausgestaltungen sind in den Unteransprüchen angegeben. Demgemäß wird ein Folienverbund zur Verwendung als Schichtenanordnung in einem Kartenkörper eines tragbaren Datenträgers vorgeschlagen, wobei zur Aufnahme mindestens eines elektrischen Leitungselements mindestens eine elastische Schicht in dem Folienverbund angeordnet ist.

Generell umfasst der Folienverbund mehrere Schichten und kann daher als Schichtanordnung bezeichnet werden, wobei in den Folienverbund typischerweise weitere elektronische Komponenten, wie beispielsweise ein Mikroprozessor bzw. ein Speicher eingebracht sind. Diese weiteren elektronischen Komponenten können beispielsweise in die elastische Schicht eingebracht werden, können aber auch in weitere optionale Schichten eingebracht werden. Bei der elastischen Schicht handelt es sich um eine Schicht, in die mindestens ein elektrisches Leitungselement eingebracht ist oder aber auch optional weitere elektronische Komponenten. Hierdurch wird verhindert, dass eine Krafteinwirkung derart auf das elektrische Leitungselement einwirkt, dass das Leitungselement durchtrennt wird.

Da Schichtanordnungen von herkömmlichen Kartenkörpern typischerweise steif bzw. starr ausgestaltet sind, kommt es typischerweise in der Nähe von elektronischen Komponenten zu einem Brechen des Kartenkörpers, so dass die elektronischen Komponenten bzw. elektrischen Leitungselemente zerstört werden. Dies wird erfindungsgemäß derart vermieden, dass eine elastische Schicht eingebracht wird, die eingerichtet ist, das elektrische Leitungselement aufzunehmen. Hierbei sei darauf verwiesen, dass die elastische Schicht nicht lediglich die Eignung aufweist, die es ermöglicht, die elektrische Leitungseinheit bzw. das Leitungselement aufzunehmen, sondern typischerweise wird erfindungsgemäß der Folienverbund derart ausgestaltet, dass das elektrische Leitungselement in die elastische Schicht eingebracht ist. Hierbei ist die elastische Schicht im Zusammenwirken mit dem elektrischen Leitungselement derart auszugestalten, dass das Leitungselement elektronischen Komponenten verbindet bzw. dass das elektrische Leitungselement selbst eine Komponente darstellt. Eine solche elektrische Komponente kann beispielsweise als eine Spulenantenne bzw. eine Induktionsspule vorliegen. Hierdurch ist es möglich, neben weiteren Funktionen bei einem Vorhalten des Kartenkörpers aufweisend die Induktionsspule im Zusammenwirken mit einem Lesegerät einen Strom zu induzieren, welcher die elektronischen Komponenten des Kartenkörpers betreibt.

Somit ist es also erfindungsgemäß möglich, dass die elastische Schicht das elektrische Leitungselement zumindest teilweise aufnimmt und/oder auch weitere elektronische Komponenten in dieser Schicht verbaut werden können. Diese elektronischen Komponenten können jedoch auch in anliegenden Schichten verbaut sein, wobei das Leitungselement diese elektronischen Komponenten derart verbindet, dass das elektrische Leitungselement von der elastischen Schicht geschützt wird.

Somit ist es erfindungsgemäß möglich, den Kartenkörper im täglichen Gebrauch zu biegen, ohne dass hierbei einzelne Schichten oder der ganze Kartenkörper reißen, so dass diese Kartenkörperfragmente auf die elektrische Leitung drücken. Dies wird generell als Kerbwirkung bezeichnet, da die gerissenen Kartenkörperfragmente an ihren Kanten in eine elektrische Leitung bzw. das elektrische Leitungselement punktuell derart einwirken, dass das Leitungselement brechen bzw. reißen kann. Dies wird erfindungsgemäß überwunden.

Der Kartenkörper eines tragbaren Datenträgers umfasst neben den elektronischen Komponenten den Folienverbund bzw. die Schichtanordnung und wird typischerweise als eine Chipkarte bzw. eine Smartcard bereitgestellt. Der Folienverbund an sich kann jedoch auch weitere optionale Elemente umfassen, wie beispielsweise weitere Schichten, insbesondere Schutzschichten. So kann der Folienverbund auch als Zwischenprodukt derart ausgeliefert werden, dass in einem weiteren Herstellungsschritt weitere Folien bzw. Schichten auf den Folienverbund auflaminiert oder aufgeklebt werden.

Die elastische Schicht ist so steif, dass der Kartenkörper formstabil ausgestaltet ist. Hierbei ist es jedoch auch möglich, weitere Schichten vorzusehen, beispielsweise aus Polycarbonat, welche der elastischen Schicht mittels einer Stützwirkung Stabilität verleihen.

Die elastische Schicht kann erfindungsgemäß in ihrer Dicke variiert werden und je nach Anwendungsszenario dünner oder dicker ausgestaltet werden, wie im Folgenden noch näher erläutert wird. Hierbei ist es auch möglich, dass die Schicht mehrere Teilschichten umfasst. Vorliegend wird Schicht und Folie synonym verwendet, da eine Folie typischerweise eine Schicht in einem Kartenkörper bereitstellt. Somit handelt es sich also um einen Folienverbund bzw. eine Schichtanordnung zur Herstellung eines Kartenkörpers, vorzugsweise einer Chipkarte.

Erfindungsgemäß ist es auch möglich, mehrere elastische Schichten vorzusehen, welche mehrere elektrische Leitungselemente bzw. weitere elektronische Komponenten umfassen. Hierbei muss lediglich sichergestellt werden, dass die im Wesentlichen elastische Schicht bzw. die elastische Schicht derart bezüglich des elektrischen Leitungselements ausgestaltet ist, dass es diese vor Krafteinwirkung schützt und insbesondere, dass bei einem Brechen von starren Schichten die elektrische Leitung bzw. das elektrische Leitungselement durch die elastische Schicht geschützt ist.

Für die Applikation der Kupferspule/Kupferantenne wird gemäß einem Aspekt der vorliegenden Erfindung keine Polycarbonat-Folie verwendet, sondern eine wesentlich elastischere Folie. Diese Folie muss in der Lage sein die Spannungen, welche durch die Biegebeanspruchung ins Material eingebracht werden, zu kompensieren. Nur somit ist gewährleistet, dass die Folie bzw. die Karte nicht bricht. Zudem muss die Folie gemäß einem Aspekt der vorliegenden Erfindung aber auch gut zu verarbeiten sein, z.B. hinsichtlich Handhabung, sogenanntes Handling, Maschinenlauffähigkeit, etc., und muss sich gut mit anderen üblichen Kartenmaterialien wie z. B. PC, PEC, PETG, PVC, etc. laminieren lassen. Insbesondere muss die Folie einen guten Verbund mit den anderen üblichen Folien eingehen.

Reine TPE-Folien würden sich bezüglich der mechanischen Eigenschaften dafür eignen. Ebenso wären bestimmte Polyolefin-Folien oder auch Polyamidfolien dafür geeignet. Alle diese Folien eignen sich jedoch nur bedingt, da sie entweder schlechtes Handlingverhalten, d.h. zu lapprig, zu klebrig, etc., besitzen oder keinen ausreichenden Laminierverbund gewährleisten. Deshalb ist es empfehlenswert, sogenannte Coextrusionsfolien, wie sie bekannt sind, zu verwenden.

Polycarbonat ist ein sehr steifes und hartes Material. Wichtige physikalische Kenngrößen wie z. B. das E-Modul und die Reißdehnung geben einen Hinweis auf das Bruchverhalten bei Kerbeinwirkung. Die Shore-Härte gibt ebenfalls Hinweise dafür, ob es sich um ein hartes oder weiches Material handelt.

Der Betrag des Elastizitätsmoduls ist umso größer, je mehr Widerstand ein Material seiner elastischen Verformung entgegensetzt. Durch die entgegenwirkende höhere Kraft erhöht sich allerdings auch die Spannung im Material. Ein Bauteil aus einem Material mit hohem Elastizitätsmodul, z. B. Stahl, ist also als ein Bauteil gleicher Konstruktion, z.B. gleiche geometrischen Abmessungen, welches aus einem Material mit niedrigem Elastizitätsmodul, z. B. Gummi, besteht. Die Reißdehnung gibt Aufschluss darüber, bei welcher Dehnung das Material versagt, d.h. reißt bzw. bricht. Ein Material mit niedriger Shore-Härte ist weicher und daher in der Regel auch flexibler.

Vorgeschlagen wird gemäß einem Aspekt der vorliegenden Erfindung eine Folie, sogenannte "Durable plastic layer/carrier film", mit mindestens folgenden Eigenschaften:
Elastizitäts-Modul: ≤ 1100 MPa
Reißdehnung: ≥ 300% und/oder
Shore Härte: ≤ 74 Shore D.

Darüber hinaus wird vorgeschlagen, mindestens eine dünne äußere Schicht, vorzugsweise beide äußeren Schichten, mit einem heißsiegelbaren Material, vorzugsweise Polycarbonat, PETG, PEC, d.h. eine Mischung, ein sogenannter Blend, aus PC/PETG, darauf zu coextrudieren, oder mit dem vorgeschlagenen Folienmaterial "Durable plastic layer/carrier film" zu vermischen. Dies ist gemäß einem Aspekt der vorliegenden Erfindung nötig für den Laminierverbund.

Gemäß einem Aspekt der vorliegenden Erfindung ist das mindestens eine elektrische Leitungselement in die elastische Schicht eingebettet. Dies hat den Vorteil, dass das elektrische Leitungselement durch die elastische Schicht geschützt wird, und insbesondere das Leitungselement sich in einem gewissen Umfang bei einer Krafteinwirkung mit der elastischen Schicht mitbiegen kann, derart, dass weder das Leitungselement noch die elastische Schicht bricht und es zu einer Zerstörung des elektrischen Leitungselements kommt. Hierbei sei darauf verwiesen, dass es erfindungsgemäß möglich ist, dass weitere elektronische Komponenten in die elastische Schicht eingebracht werden.

Gemäß einem weiteren Aspekt der vorliegenden Erfindung ist die elastische Schicht derart bezüglich des elektrischen Leitungselements ausgestaltet, dass Krafteinwirkungen auf den Folienverbund nicht direkt auf das elektrische Leitungselement wirken. Dies hat den Vorteil, dass es nicht, wie es in einer starren Schichtanordnung der Fall ist, dass die Schichten derart starr mit dem elektrischen Leitungselement verbunden sind, dass eine Krafteinwirkung auf das elektrische Leitungselement wirkt, sondern vielmehr ist die elastische Schicht derart biegsam, dass Krafteinwirkungen durch die elastische Schicht abgemildert bzw. abgedämpft werden. Ferner ist die elastische Schicht derart ausgestaltet, dass ein Brechen dieser Schicht verhindert wird, wobei die Bruchfragmente auf das elektrische Leitungselement einwirken würden. Erfindungsgemäß wird also somit bewirkt, dass die Krafteinwirkung auf den Folienverbund nicht derart unvermindert auf das elektrische Leitungselement weitergegeben wird, dass dieses brechen würde.

Gemäß einem weiteren Aspekt der vorliegenden Erfindung liegt das elektrische Leitungselement als eine Spule und/oder eine Antenne vor. Dies hat den Vorteil, dass die Spule oder die Antenne besonders geschützt sind, was besonders vorteilhaft ist, da ein entsprechendes elektrisches Leitungselement, welches eine Spule und/oder eine Antenne ausformt, im Verhältnis zu weiteren elektrischen bzw. elektronischen Komponenten der Chipkarte besonders lang ausgestaltet ist. Um eine möglichst große Induktionsfläche zu erhalten, ist ein Leitungselement, welches als Spule bzw. als Antenne ausgestaltet ist, typischerweise um den gesamten Umfang des Kartenkörpers ausgelegt. Somit wird also die Wirkfläche der Spule bzw. der Antenne vergrößert und somit optimiert. Erfindungsgemäß wird somit für die Applikation der Kupferspule bzw. Kupferantenne eine elastische Folie verwendet. Somit werden also auch diese Komponenten vor einem Bruch und somit einer Zerstörung gesichert.

Gemäß einem weiteren Aspekt der vorliegenden Erfindung verbindet das elektrische Leitungselement mindestens zwei elektronische Komponenten in dem Kartenkörper. Dies hat den Vorteil, dass die besonders anfälligen Leitungselemente zwischen elektronischen Komponenten gesichert werden, da diese typischerweise ebenfalls aus Kupfer hergestellt werden und bei einem Bruch des Kartenkörpers typischerweise abreißen würden. Auch dies wird erfindungsgemäß überwunden, und die elektrischen Leitungselemente werden vorteilhaft vor einem Bruch bzw. Riss gesichert.

Gemäß einem weiteren Aspekt der vorliegenden Erfindung weist die elastische Schicht ein Elastizitätsmodul von maximal 1100 MPa auf. Dies hat den Vorteil, dass gerade bei diesem Wert überraschenderweise herausgefunden wurde, dass die Karte zwar eine notwendige Steifigkeit aufweist, die elastische Schicht jedoch elastisch genug ist, um den beschriebenen technischen Effekt herbeizuführen.

Gemäß einem weiteren Aspekt der vorliegenden Erfindung weist die elastische Schicht eine Reißdehnungstoleranz von mindestens 300 Prozent des Ausgangszustands auf. Dies hat den Vorteil, dass der Kartenkörper auch im täglichen Gebrauch entsprechend gebogen werden kann, wobei der Kartenkörper durch die elastische Schicht die Biegung ohne Beschädigung übersteht. Somit wird also ein Brechen bzw. ein Riss verhindert. Eine solche Dehnung tritt typischerweise dann auf, falls die Chipkarte über einen gewissen Punkt gebogen wird, wobei sich der biegende Teil derart deformiert, dass es zu einer stellenweisen Dehnung kommt. Überraschenderweise wurde herausgefunden, dass gerade der beschriebene Wert besonders vorteilhaft ist.

Gemäß einem weiteren Aspekt der vorliegenden Erfindung weist die elastische Schicht eine Shore-Härte von maximal 74 Shore D auf. Dies hat den Vorteil, dass ein genauer Wert angegeben werden kann, der die im Wesentlichen elastische Schicht bzw. die elastische Schicht beschreibt. Überraschenderweise wurde auch hier herausgefunden, dass genau dieser Wert im täglichen Gebrauch besonders vorteilhaft ist.

Insbesondere ist es vorteilhaft, die jeweils angegebenen Werte derart miteinander zu kombinieren, dass die elastische Schicht alle diese Kennzeichen umfasst. Hierdurch wird eine besonders vorteilhafte Ausgestaltung des Folienverbunds erreicht. Der Fachmann weiß hierbei, wie er die elastische Schicht ausgestalten kann, damit diese Werte erreicht werden. Typischerweise können Kunststoffe verwendet werden, die als elastische Schicht in den Folienverbund eingebracht werden. Entsprechende Materialien sind bereits aus anderen Domänen bekannt, woraus sich der Fachmann bedient.

Gemäß einem weiteren Aspekt der vorliegenden Erfindung ist an der Oberseite und/oder der Unterseite der elastischen Schicht eine Schicht aus heißsiegelbarem Material angeordnet. Dies hat den Vorteil, dass ein solches Material besonders vorteilhaft mit der elastischen Schicht beispielsweise mittels Laminierens verbunden werden kann. Bei der Oberseite und/oder der Unterseite handelt es sich lediglich um Seiten des Folienverbunds, wobei es auf die Orientierung nicht ankommt. Die Oberseite und die Unterseite bringen lediglich zum Ausdruck, dass es sich hierbei um die großflächige Seite des Folienverbunds handelt und nicht um die Stärke des Folienverbunds. Somit ist also an einer ersten Seite und/oder an einer zweiten Seite der elastischen Schicht eine Schicht aus heißsiegelbarem Material angeordnet.

Gemäß einem weiteren Aspekt der vorliegenden Erfindung ist die Schicht aus heißsiegelbarem Material coextrudiert. Dies hat den Vorteil, dass sich diese Schicht besonders vorteilhaft mit der elastischen Schicht verbinden lässt, wobei die elastische Schicht derart ausgestaltet sein muss, dass sie eine permanente Verbindung mittels der weiteren Schicht aus heißsiegelbarem Material eingeht.

Gemäß einem weiteren Aspekt der vorliegenden Erfindung weist der Folienverbund mindestens eine weitere Schicht aus einem im Wesentlichen steifen Material auf. Dies hat den Vorteil, dass die Steifigkeit des Kartenkörpers insgesamt nicht lediglich von der elastischen Schicht bewirkt werden muss, sondern vielmehr können weitere Schichten vorgesehen werden, die dem Kartenkörper seine Steifigkeit bzw. Formstabilität verleihen. Bei einem im Wesentlichen steifen Material ist dem Fachmann geläufig, dass das Material generell biegsam ist, wobei dies jedoch in engen Grenzen zu verstehen ist. Ein Beispiel für ein Material, welches im Wesentlichen steif ist, ist Polycarbonat. Insgesamt ist somit das Merkmal "im Wesentlichen" optional und verdeutlicht lediglich den Aspekt, dass auch dieses steife Material in engen Grenzen biegsam ist.

Die Aufgabe wird auch gelöst durch eine Chipkarte mit einem Kartenkörper, der den vorgeschlagenen Folienverbund umfasst. Somit wird also auch eine Chipkarte vorgeschlagen, welche die Merkmale des Folienverbunds trägt, da der Folienverbund alleine oder mit weiteren Komponenten bzw. Schichten in die Chipkarte eingebracht ist.

Hierbei ist es besonders vorteilhaft, dass der Folienverbund mittels der vorgeschlagenen Vorrichtung hergestellt werden kann, wobei das vorgeschlagene Verfahren zur Ausführung gelangt. Das vorgeschlagene Verfahren dient generell dem Betreiben der vorgeschlagenen Vorrichtung, und die vorgeschlagene Vorrichtung ist eingerichtet, das Verfahren auszuführen. Beispielsweise implementiert das vorgeschlagene Verfahren einzelne Verfahrensschritte derart, dass die strukturellen Merkmale des Folienverbunds Niederschlag finden.

Weitere vorteilhafte Ausgestaltungen werden anhand der beigefügten Figuren näher erläutert. Es zeigen:
- Fig. 1:: eine Coextrusionsfolie aus drei Schichten gemäß einem Aspekt der vorliegenden Erfindung;
- Fig. 2:: eine Coextrusionsfolie aus fünf Schichten gemäß einem Aspekt der vorliegenden Erfindung;
- Fig. 3:: eine Folie mit laminierbaren Außenschichten gemäß einem Aspekt der vorliegenden Erfindung;
- Fig. 4:: ein Schichtenaufbau mit Spule bzw. einer Antenne gemäß einem Aspekt der vorliegenden Erfindung;
- Fig. 5:: ein weiterer Schichtenaufbau ebenfalls mit einer Spule bzw. einer Antenne gemäß einem weiteren Aspekt der vorliegenden Erfindung; und
- Fig. 6:: ein weiterer mehrschichtiger Folienaufbau gemäß einem weiteren Aspekt der vorliegenden Erfindung.

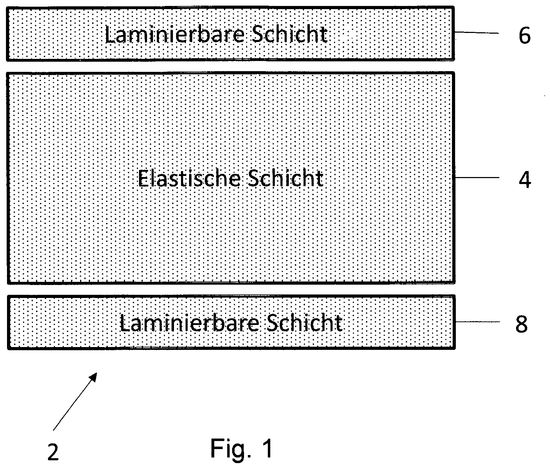

Fig. 1 zeigt den Folienverbund 2, wobei die elastische Schicht 4 in der Mitte angeordnet ist und an der Ober- und Unterseite jeweils eine laminierbare Schicht 6, 8 angeordnet ist. Schicht 6, 8 kann hierbei PC, PETG, PEC bzw. aus einem Blend aus TPE und PC oder PETG oder PEC bestehen. Ferner kann die Schicht 4 einen thermoplastischen Elastomer aufweisen.

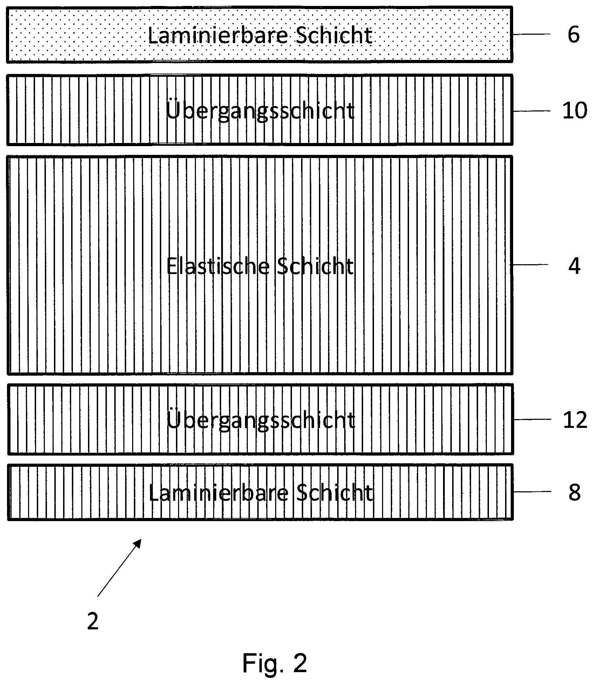

Fig. 2 zeigt einen angepassten Folienverbund 2, der gegenüber Fig. 1 zwei Übergangsschichten 10, 12 aufweist. Schichten 6, 8 können bevorzugt die Materialien umfassen, wie sie bereits gemäß Fig. 1 aufgezählt wurden. Schichten 10, 12 können ferner ein Blend aus TPE und PC oder PETG oder PEC umfassen. Schicht 4 kann wiederum einen thermoplastischen Elastomer umfassen.

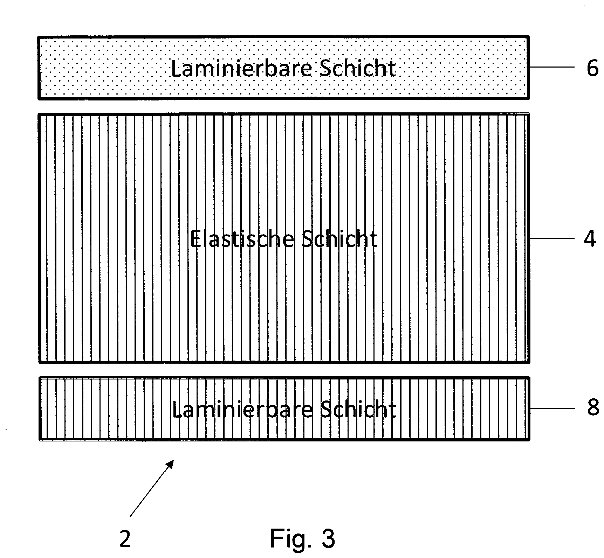

Fig. 3 zeigt eine laminierbare Schicht 6, 8, welche eine Lackschicht bzw. einen siegelfähigen Kleber aufweist. Dies kann in einem Beschichtungsverfahren oder in einem Coextrusionsverfahren appliziert werden. Schicht 4 umfasst wiederum einen thermoplastischen Elastomer.

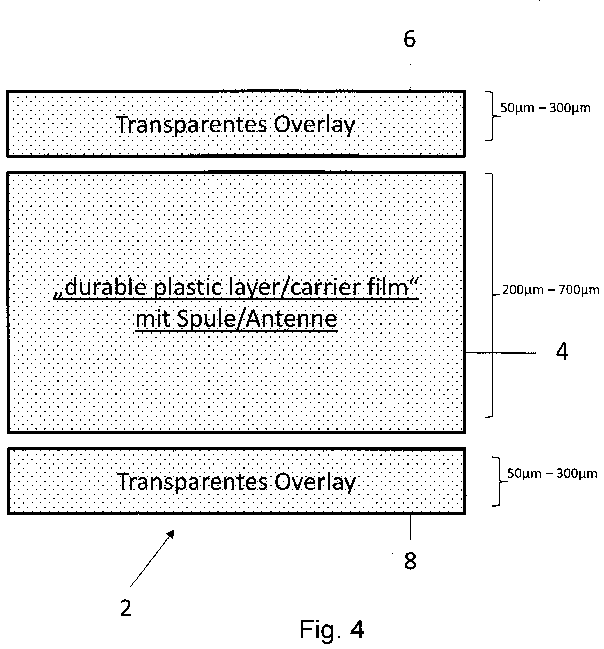

Fig. 4 zeigt einen Minimalaufbau des Folienverbunds 2, umfassend die elastische Schicht 4 und pro Seite jeweils eine transparente Overlay-Folie 6, 8 bzw. eine Schutzschicht 6 ,8. Die Karte kann aber auch aus einem Durable Plastic Layer/Carrier Film 4 und mehreren Overlay-Folien 6, 8 bestehen. Geeignete Materialien sind hierbei PC, PETG, PEC, PVC, ABS, PET, PMMA, PA, PEN und allgemein alle technischen Thermoplaste. Ferner kann die Spule drucktechnisch abgedeckt werden.

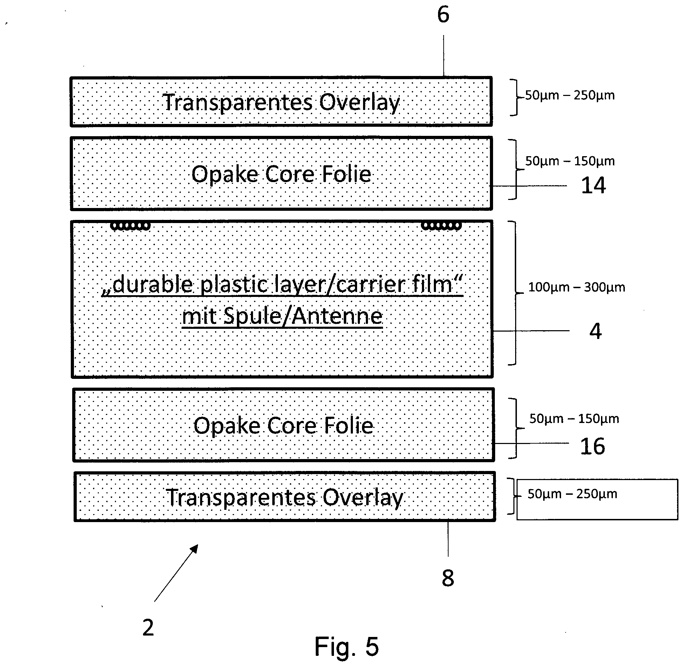

Fig. 5 zeigt ebenfalls einen Minimalaufbau eines Folienverbunds 2, umfassend den erfindungsgemäßen Durable Plastic Layer/Carrier Film 4, also die elastische Schicht, und pro Seite jeweils eine opake Core-Folie 14,16 und eine transparente Overlay-Folie 6, 8. Der Folienverbund 2 kann aber aus einem Durable Plastic Layer/Carrier Film und mehreren Core-Folien und mehreren Overlay-Folien bestehen. Geeignete Materialien sind hierbei PC, PETG, PEC, PVC, ABS, PET, PMMA, PA, PEN sowie allgemein alle technischen Thermoplaste.

Die Dickenangaben sind nur Beispiele, wobei der Folienverbund 2 insgesamt nicht dicker als 840 µm und nicht dünner als 680 µm sein darf.

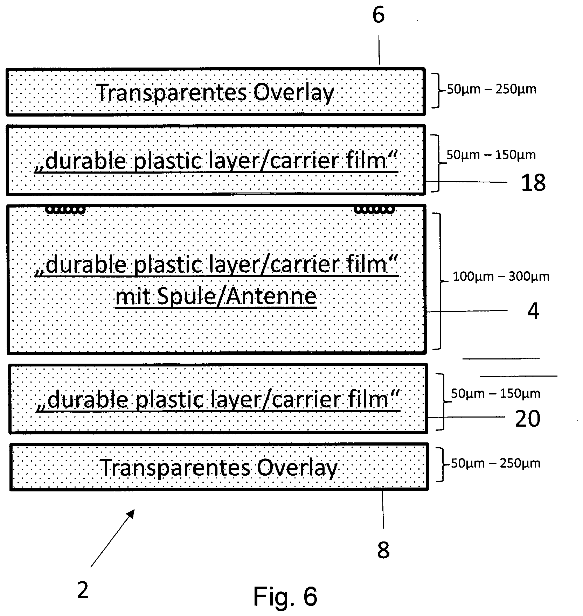

Fig. 6 zeigt einen Aufbau des Folienverbunds 2, umfassend den Carrier Film bzw. den Durable Plastic Layer 4, also die elastische Schicht, und pro Seite jeweils einen weiteren Durable Plastic Layer/Carrier Film 18 und 20 mit einer transparenten Overlay-Folie 6, 8. Somit kommen also mehrere elastische Schichten erfindungsgemäß zum Einsatz. Folien 18 und 20 können bedruckt werden. Ebenso kann die Overlay-Folie 6, 8 bedruckt werden. Folien 18, 20 und 4 können einzeln mit mindestens beiden Overlay-Folien 6, 8 zusammenlaminiert werden. Ferner kann aus den Folien 18, 20 und 4 ein sogenannter Prelam gemacht werden und dieses Prelam kann dann bedruckt werden und mit den Overlay-Folien 6, 8 zusammenlaminiert werden. Bei einem Prelam handelt es sich um einen Folienverbund, der vorab laminiert ist und ggf. in weiteren Herstellungsschritten wiederverwendet wird. Beispielsweise können auf den Prelam weitere Folien auflaminiert werden.

Wiederum sind die Dickenangaben nur Beispiele.

Ein weiteres nicht in den Figuren dargestelltes Ausführungsbeispiel zeigt einen Minimalaufbau umfassend einen Standard-Polycarbonat-Film, der ein-oder beidseitig eine elastische Schicht 22, 24 aufweist und mit einer transparenten Overlay-Folie 6, 8 abgedeckt ist. Der Folienverbund 2 kann aber auch aus unterschiedlichen Materialien, die angrenzend zum Durable Plastic Film, also zur elastischen Schicht 22, 24, liegen und damit nur laminierbar und/ oder verbindbar sein. Geeignete Materialien sind wiederum PC, PETG, PEC, PVC, ABS, PET, PMMA, PA, PEN und allgemein alle technischen Thermoplaste.

Die Folien 22 und 24 können bedruckt werden. Ebenso gilt dies für die Overlay-Folien. Folien 22, 24 und 4 können einzeln mit mindestens beiden Overlay-Folien zusammenlaminiert werden. Ferner kann aus den Folien 22, 24 und 4 ein Prelam hergestellt werden und dieses Prelam kann bedruckt werden und mit den Overlay-Folien 6, 8 zusammenlaminiert werden.

Erfindungsgemäß handelt es sich bei dem sogenannten "Durable Plastic Layer/Carrier Film" um die elastische Schicht. Diese Schicht umfasst das elektrische Leitungselement, wobei erfindungsgemäß auch weitere Komponenten in diese Schicht eingebracht werden können. Besonders vorteilhaft ist die erfindungsgemäße Ausgestaltung unter Verwendung des elektrischen Leitungselements deshalb, da weitere elektronische Komponenten typischerweise steif ausgestaltet sind und somit der vorteilhafte erfinderische Beitrag besonders bei dem elektrischen Leitungselement zum Tragen kommt.

## Patentansprüche

1. Folienverbund (2) als Schichtanordnung in einem Kartenkörper eines tragbaren Datenträgers, wobei mindestens ein elektrisches Leitungselement auf mindestens einer elastischen Schicht (4) in dem Folienverbund (2) angeordnet ist,
**dadurch gekennzeichnet, dass** die elastische Schicht (4) ein Elastizitätsmodul von maximal 1100 MPa aufweist,
wobei die elastische Schicht (4) eine Reißdehnungstoleranz von mindestens 300 Prozent des Ausgangszustands aufweist,
wobei die elastische Schicht (4) eine Shore-Härte von maximal 74 Shore D aufweist.

2. Folienverbund (2) nach Anspruch 1, **dadurch gekennzeichnet, dass** das mindestens eine elektrische Leitungselement in die elastische Schicht (4) eingebettet ist.

3. Folienverbund (2) nach einem der vorhergehenden Ansprüche,
**dadurch gekennzeichnet, dass** das elektrische Leitungselement als eine Spule und/ oder eine Antenne vorliegt.

4. Folienverbund (2) nach einem der vorhergehenden Ansprüche,
**dadurch gekennzeichnet, dass** das elektrische Leitungselement mindestens zwei elektronische Komponenten in dem Kartenkörper verbindet.

5. Folienverbund (2) nach einem der vorhergehenden Ansprüche,
**dadurch gekennzeichnet, dass** an der Oberseite und/ oder der Unterseite der elastischen Schicht (4) eine Schicht aus heißsiegelbarem Material angeordnet ist.

6. Folienverbund nach Anspruch 5, **dadurch gekennzeichnet, dass** die Schicht aus heißsiegelbarem Material coextrudiert ist.

7. Chipkarte mit einem Kartenkörper, **dadurch gekennzeichnet, dass** ein Folienverbund (2) gemäß einem der Ansprüche 1 bis 6 umfasst ist.

## Claims

1. Film composite (2) as a layer arrangement in a card body of a portable data carrier, wherein at least one electrical conduction element is arranged on at least one elastic layer (4) in the film composite (2), **characterised in that**
the elastic layer (4) has a modulus of elasticity of at most 1100 MPa,
wherein the elastic layer (4) has an elongation-at-break tolerance of at least 300 percent of the initial state,
wherein the elastic layer (4) has a Shore hardness of at most 74 Shore D.

2. Film composite (2) according to claim 1, **characterised in that** the at least one electrical conduction element is embedded in the elastic layer (4).

3. Film composite (2) according to any one of the preceding claims, **characterised in that** the electrical conduction element is present as a coil and/or an antenna.

4. Film composite (2) according to any one of the preceding claims, **characterised in that** the electrical conduction element connects at least two electronic components in the card body.

5. Film composite (2) according to one of the preceding claims, **characterised in that** a layer of heat-sealable material is arranged on the upper side and/or the lower side of the elastic layer (4).

6. Film composite according to claim 5, **characterised in that** the layer of heat-sealable material is coextruded.

7. Smart card with a card body, **characterised in that** a foil composite (2) according to one of the claims 1 to 6 is comprised.

## Revendications

1. Film composite (2) en tant qu'agencement de couches dans un corps de carte d'un support de données portable, au moins un élément de conduite électrique étant agencé sur au moins une couche élastique (4) dans le film composite (2),
**caractérisé en ce que** la couche élastique (4) comporte un module d'élasticité s'élevant au maximum à 1100 MPa,
cependant que la couche élastique (4) présente une tolérance d'allongement à la rupture s'élevant à au moins 300 pourcent de l'état initial,
cependant que la couche élastique (4) présente une dureté Shore s'élevant au maximum à 74 Shore D.

2. Film composite(2) selon la revendication 1, **caractérisé en ce que** le au moins un élément de conduite électrique est encastré dans la couche élastique (4).

3. Film composite (2) selon une des revendications précédentes, **caractérisé en ce que** l'élément de conduite électrique se trouve sous forme d'une bobine et/ou d'une antenne.

4. Film composite (2) selon une des revendications précédentes, **caractérisé en ce que** l'élément de conduite électrique relie au moins deux composants électroniques dans le corps de carte.

5. Film composite (2) selon une des revendications précédentes, **caractérisé en ce que**, à la face de dessus et/ou à la face de dessous de la couche élastique (4), une couche en matière thermoscellable est agencée.

6. Film composite selon la revendication 5, **caractérisé en ce que** la couche en matière thermoscellable est coextrudée.

7. Carte à puce ayant un corps de carte, **caractérisée en ce qu'**un film composite (2) selon une des revendications de 1 à 6 est compris.
